# EUROPEAN PATENT SPECIFICATION

(11) **EP 3 248 748 B1**
(45) Date of publication and mention of the grant of the patent: **08.07.2020**
(21) Application number: 17170063.6
(22) Date of filing: 09.05.2017
(51) Int. Cl.: B29B 7/74, B29B 7/32, B29B 7/46, B29B 7/60, B29B 7/88, B29B 7/94, B01F 3/12, B01F 3/18, B01F 5/06, B01F 5/24, B01F 5/26, B01F 7/00, B01F 7/04, B01F 13/10, B29C 48/29, B29B 9/16, B29C 48/03, B29C 48/28, B29C 48/50

(54) **DOSAGE AND INJECTION SYSTEM FOR AT LEAST ONE LIQUID TO BE FED TO AN EXTRUDER**
DOSIERUNGS- UND INJEKTIONSSYSTEM FÜR MINDESTENS EINE EINEM EXTRUDER ZUZUFÜHRENDE FLÜSSIGKEIT
SYSTÈME D'INJECTION ET DE DOSAGE D'AU MOINS UN LIQUIDE DEVANT ÊTRE INTRODUIT DANS UNE EXTRUDEUSE

(30) Priority: 23.05.2016 IT UA20163680
(43) Date of publication of application: 29.11.2017
(73) Proprietor: ELAV S.R.L., 28062 Cameri (NO) (IT)
(72) Inventor: LAVATELLI, Giuseppe, 28062 CAMERI (NO) (IT)
(74) Representative: Martegani, Franco

(56) References cited:
- EP-A1- 0 129 121
- US-A- 4 117 063
- US-A- 4 191 480
- US-A- 4 698 378
- US-A1- 2007 297 272
- US-B2- 7 077 906
- US-B2- 8 220 984

## Description

The present invention relates to a dosage and injection system of substances with a fluid behaviour for at least one liquid to be fed to an extruder.

Various technologies are used for feeding extruders, for example for the production of insulated cables or pipes, in order to have a high-quality product and with the characteristics required by the market and use.

Specific equipment is therefore used for the production of the mixture to be fed to the extruders.

An apparatus is known for example, which is the object of patent US 8,220,984 B2, in which the material positioned in upper hoppers is fed by gravity to a weighing container before reaching a vertical-axis mixer for entering the extruder.

In equipment of the type indicated above, the components necessary for producing extruded manufactured articles are mixed, but said mixing is not always sufficient for having an optimum product for entering the extruder.

It should also be pointed out that for the production of said manufactured articles, a special method has been used since 1974, introduced by Dow Chemical and called "Monosil".

In this method, polyethylene, silane, a small quantity of peroxide, a catalyst and further additives are added, for example, to a single-screw extruder, forming an extrusion line. The homogenization of the products, the grafting reactions and forming of the manufactured article, which, as already mentioned, normally consists of pipes or electric cables, are completed in this single extrusion line.

It can therefore be seen that with these methods, in addition to components having a purely fluid behaviour or, in any case, in granular or powder form, liquid products are also used, such as silane or peroxides or similar products.

The crosslinking of the final product partially takes place in the hot water used for cooling the manufactured article after extrusion and completed within one or two days with atmospheric humidity.

This crosslinked polyethylene is indicated with the abbreviation "XLPE", such as high-density polyethylene.

High-density polyethylene is a thermoplastic macromolecular product, deriving from the polymerization of the ethylene monomer (CH₂=CH₂).

Polyethylene is therefore composed of various macromolecular (polymeric) chains, whose cohesion forces cannot be considered, strictly speaking, real chemical bonds, but they are of an electric nature and are normally called "Van der Waals" forces.

Even if these cohesion forces are low, the high number of intramolecular bonds favours the formation of certain characteristics of the manufactured product.

In any case, the low energy of the cohesion forces makes the thermoplastic material particularly sensitive to temperature, which causes a significant deterioration in the characteristics.

If, in addition to "Van der Waals" forces, intramolecular chemical bonds, called crosslinking bonds, are also inserted, these considerably increase the thermal performances of the manufactured articles.

Crosslinking is a process which modifies the chemical structure of the material, creating, by means of connections between the polymeric chains, a three-dimensional "network" structure. The new structure determines specific characteristics, i.e.:
- the maximum temperature of use is increased
- the creep deformation is reduced
- the chemical resistance is increased
- the UV-ray resistance is increased
- the abrasion resistance is increased
- the impact strength is increased
- the notch sensitivity and abrasion is increased
- thermal memory characteristics ("thermoelastic polymer") are conferred to the material.

Against these advantages, however, XLPE has the disadvantage of not being recyclable, but must be disposed of even when it is only partially crosslinked. This represents a cost increase for manufactured products made of XLPE alone and even more so when XLPE is extruded on metal supports, typically copper, as for electric cables.

Furthermore, it should also be considered that in equipment such as that shown in the US patent, sending e. g. silane to the mixer before entering the extruder, is not without risks, due to the dangerous nature of the product from both a corrosive point of view and also an explosive point of view under certain conditions, in addition to risks associated with its safe disposal.

The document US 2007/297272 A1 discloses a dosage and injection system according to the preamble of claim 1.

The document EP 0129121 A1 discloses the use of a composition of copolymers and catalysts in the production of covered wires and cables.

The general objective of the present invention is to provide a dosage and injection system of substances with a fluid behaviour for at least a liquid to be fed to an extruder, of both a solid granular type and also liquid, capable of solving the above-mentioned drawbacks of the known art, in an extremely simple, economical and particularly functional manner.

A further objective of the present invention is to provide a system which feeds in a safe environment, not exposed to humidity or air, without the danger of fire, and without any possible harmfulness towards the outside, thus allowing a high degree of safety.

Another objective of the present invention is to provide a system in which there is a reasonable certainty of the quantities of solid-liquid products used with the production of high-quality manufactured articles.

Therefore, present invention is directed to a dosage and injection system according to claim 1; preferred embodiments are claimed in the dependent claims.

The structural and functional characteristics of the present invention and its advantages with respect to the known art will appear even more evident from the following description, referring to the enclosed schematic drawings which show an embodiment example of the invention itself. In the drawings:
- figure 1 is a block scheme showing a dosage system according to the present invention;
- figure 2 is a raised side view illustrating a mixing group used in the system according to the present invention;

- figure 3 is a sectional view according to the line III-III of the group of figure 2;
- figures 4, 5, 6 and 7 are a raised view, a sectional view and two perspective views of a static mixing element of the group illustrated in figures 2 and 3;

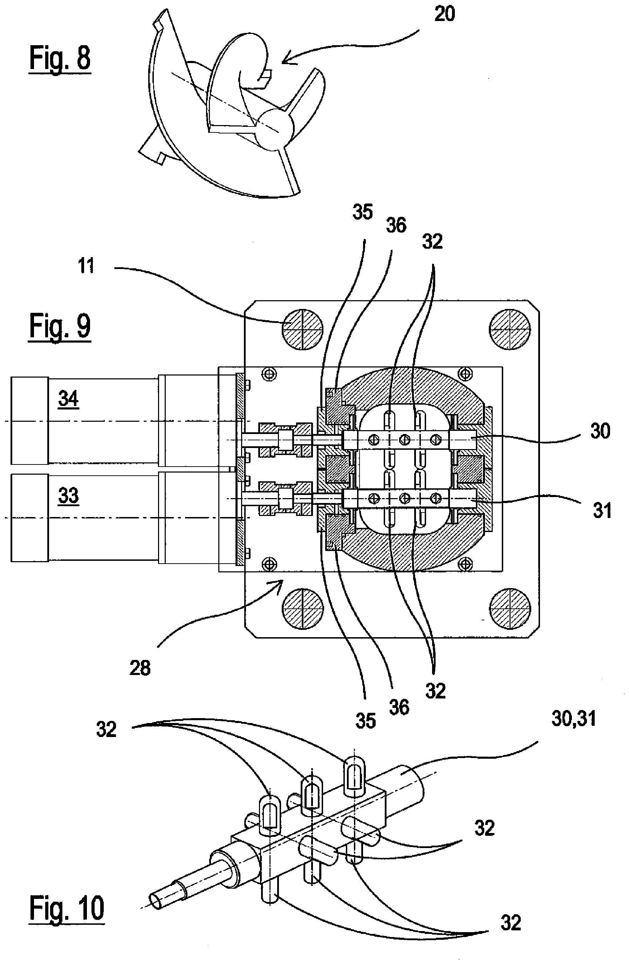

- figure 8 is a perspective view of a second static mixer forming part of the group illustrated in figures 2 and 3;
- figure 9 is a partially sectional plan view from above of a dynamic mixer forming part of the group illustrated in figures 2 and 3;
- figure 10 is a perspective view of part of the mixer shown in figure 9.

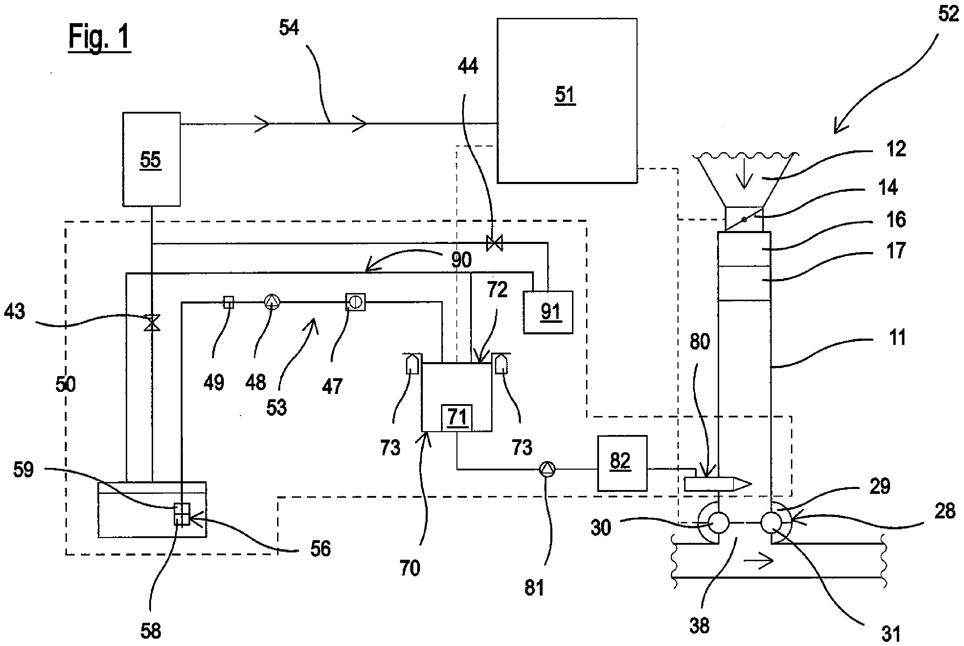

With reference to figure 1, this illustrates a dosage and injection system of substances with a fluid behaviour for at least one liquid to be fed to an extruder according to the present invention.

In this scheme representing a system of the invention, the use of silane is envisaged, but, as specified, this liquid can be substituted, as an alternative, by peroxides or other similar liquids.

The system of the invention according to claim 1 has been subdivided, for the sake of commodity, into a first main section for devices responsible for the transportation, pumping and measurement of silane, indicated by a dashed area in the box 50, to which a second section for the electric control parts, indicated by 51, physically separated from the above, and a mixing group, indicated as a whole with 52, are operatively connected.

The first main section or area 50, is ventilated in the suction, and therefore with a negative pressure with respect to the environment. The second section or area for the electric control parts 51, on the other hand, is pressurized in an inert atmosphere by means of nitrogen feeding 54 from a tank 55 in order to prevent silane vapours from entering the area.

The passage of the pipes between the two areas is effected through bulkheads which maintain the physical separation; the nitrogen valves are pneumatically actuated so as not to have any electric device in the silane area.

More specifically, the main section 50 of silane is composed of a series of main subgroups which are the following.

A suction group 56 from a drum consists of a probe 58 with a stainless steel pipe and a sealing valve 59 to keep the pipe continuously full. A sealing ring to be screwed onto the bushing for emptying the drum with a sealing gasket made of PTFE (polytetrafluoroethylene) on the stainless steel pipe, a pipe for supplying silane from the drum made of PTFE with an AISI 316 stainless steel braiding, a supply pipe of nitrogen to the drum and a pipe for equalizing the nitrogen pressures between the drum, scales and expansion vessel 91 made of PTFE (some of which are not shown). It should be pointed out that the silane drum is not necessarily situated in this main section 50.

A pumping and filtering group 53 which sucks silane from the drum and pumps it through filters 47 to a subsequent gravimetric group 70. This group is composed of a pneumatically actuated membrane valve 49 made of PTFE, for intercepting the suction during inactivity, and a pneumatically actuated membrane pump 48 made of PTFE. The group is completed by a manual flow diverter for supply to the filters, to select the operating filter, two Aisi 316 steel filters with a sintered steel cartridge having a filtering capacity of < 5µ. Of these filters, one is active in filtering, whereas the other remains in stand-by to guarantee the operating continuity during the cleaning of the first filter. A flow diverter is also provided for supply to the subsequent weighing station to select the filter from which the liquid is coming (none of these elements are shown) .

As already indicated, the gravimetric group schematized in 70 is also provided, which determines the current flow-rate of silane supplied by the system by means of a redundancy control weight loss group. The gravimetric group 70 is composed of a barrel 71 with a sealing lid thanks to a PTFE gasket. The barrel 71 is suspended on two arms of a strain gauge bridge 72. The strain gauge bridge is rigid and implements two load cells 73 which are actuated by adjustment screws which equalize the weight sustained by each cell. In this way, a redundancy control of the weight loss is obtained, and the congruency of the indications of one cell with respect to the other is diagnosed. A corrugated or coiled pipe made of PTFE is also provided for supplying the silane coming from the flow diverter at the outlet of the filtering group, in addition to a corrugated pipe made of PTFE for sending the silane to the injection pump, and a corrugated pipe made of PTFE for connecting the drum to the expansion vessel. The expansion vessel makes the pressure variation of the nitrogen in the barrel during recharging, negligible.

An excessive pressure variation disrupts the flow-rate equilibrium.

An injection group 80 is also provided, which pumps the silane into the mixing group 52, measuring its flow-rate. This injection group 80 consists of a gear pump 81 with seals. The pump 81 is of the magnetic drag type, and therefore glandless and without dynamic seals. A pressure supply transducer detects the pressure in order to determine the compensation flow-ate/Δ Pressure of the pump.

A mass flow meter 82 positioned downstream of the gravimetric group 70 measures the mass flow-rate of incoming silane. These measurement represents the feedback for regulating the velocity of the pump 81 and is continuously compared with the measurement of the previous gravimetric weight loss group 70 generating an alarm in the case of deviation.

This double control, together with the previous congruency control between the load cells 73, represents an important element for the system of the invention.

Connection pipes with the reinforced PTFE injector with Aisi 316 braiding, are obviously provided.

An injector with body and shutter made of Aisi 316, together with seals and nozzle made of PTFE, are inserted in the injection group 80. The nozzle and shutter are self-cleaning and, when closed, are hermetically sealed to ensure that the silane in the circuit upstream remains protected from the air. The injector does not have any nebulizing function of the silane, but only the task of bringing it to the centre of the area of the mixer of interest, which is described further on, and guaranteeing the immediate stoppage of the addition to avoid feeding which is no longer required.

Nitrogen supply pipes to the mixer 52 and its seals are provided, in addition to compressed air pipes for controlling the shutter.

In the main area 50, a nitrogen stabilization circuit is provided, as schematized in 90.

This circuit 90 has the function of preventing pressure variations upstream of the gear pump, as these would result in unacceptable flow-rate variations for the process. The silane circuit, between the drum and the injector group 80 is pressurized at a controlled value and regulated by the introduction of nitrogen. The silane circuit is therefore completely sealed and can operate with positive or negative pressures equal to 1,000 Pa. Its operating pressure ranges from 100 to 300 Pa, negative or positive, as required.

The nitrogen stabilization circuit 90 is composed of an expansion vessel 91, for example with a capacity of 12 dm³, whose function is to make the pressure variations in the gravimetric barrel 71 negligible during its filling. A differential pressure transducer is also provided, of which one plug is connected to the expansion vessel 91 and the other to the "silane" area of the system of the invention.

A pneumatic valve for introducing nitrogen into the stabilization circuit has the function of topping up nitrogen to compensate the emptying of the drum in order to maintain a set operating pressure. The inlet branch is completed by a variable area flow regulator/meter.

A membrane valve is also provided for discharging unexpected overpressures in the stabilization circuit. The outlet branch is completed by a flow regulator and terminates in the suction intake of the fan which puts the "silane" section in depression, evacuating the minimum quantity of nitrogen mixed with vapours towards the outside.

A connection pipe between the expansion vessel and drum guarantees, with greater delay with respect to the action of the expansion vessel, the re-equilibrium of the pressures between the gravimetric barrel, the expansion vessel and the drum.

A nitrogen feeding pipe to the drum has the function of introducing nitrogen and preventing the entry of air when the drum is changed. The inlet branch is completed by a variable area flow regulator/meter.

The system also comprises a primary nitrogen circuit and a circuit for the mixer.

The primary circuit has the function of preparing the nitrogen at the required pressure for a good regulation of the distribution valves.

The function of the circuit for the mixer is to enable the part relating to the injection of silane to operate in an inert atmosphere and therefore not to allow any contact between silane and air.

The two circuits indicated above are composed of a filter, a condensate separator and reducer of the inlet pressure which reduces the pressure to 250÷300 kPa, a pressure switch for detecting the minimum nitrogen pressure at the inlet, a second pressure reducer for exiting at the distribution pressure, and three-way valves with pneumatic actuation.

A first valve is positioned on the nitrogen supply branch to the mixer complete with flow regulator and viewer of the variable section type.

A second valve is positioned on the nitrogen supply branch to the rotating seals of the mixer complete with flow regulator and viewer of the variable section type.

A third valve 43 is positioned on the nitrogen supply branch to the drum and a fourth valve 44 to the expansion vessel previously described; these branches are also complete with flow regulator and viewer of the variable section type.

Finally, valves for electric box pressurization complete with flow regulator and viewer of the variable section type.

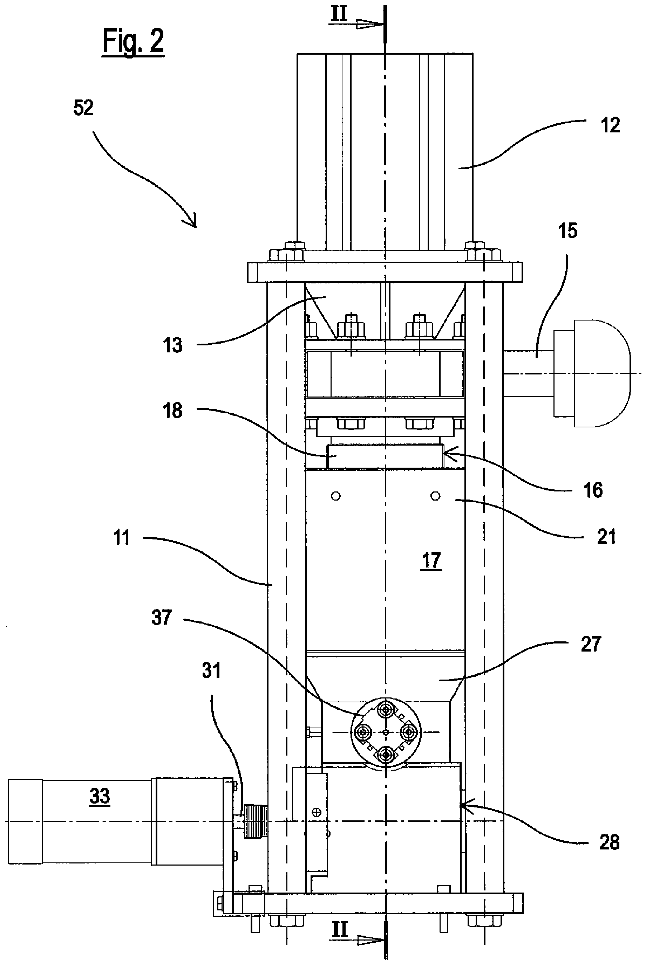

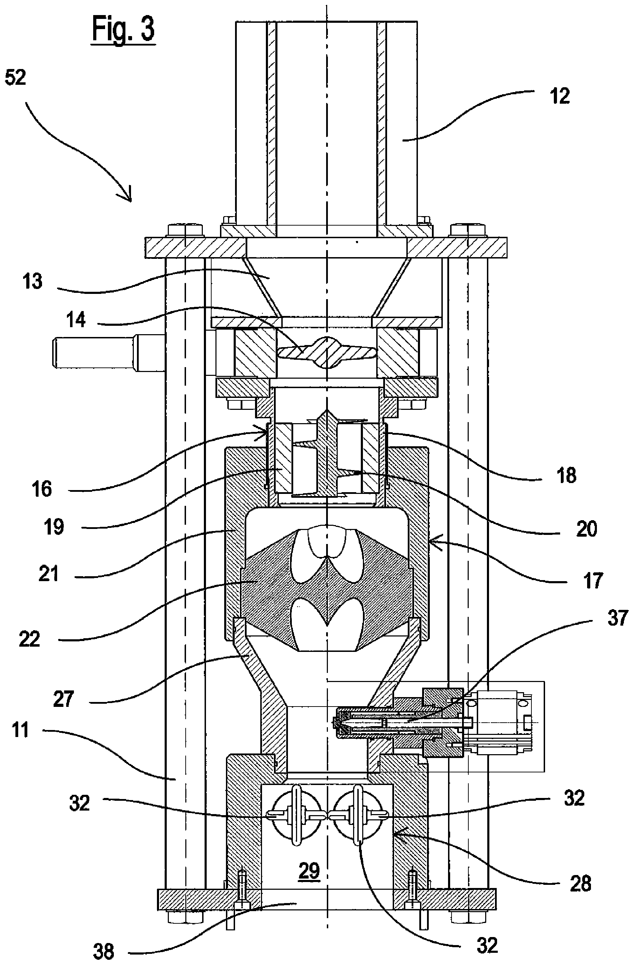

As far as figures 2 and 3 are concerned, these show, in greater detail, a mixing group 52 used in the dosage and injection system of substances with a fluid behavior for at least one liquid to be fed to an extruder, according to the present invention.

The mixing group comprises a supporting structure 11 which contains above one or more hoppers 12 containing the materials to be fed to an extruder, not shown, such as, for example, various types of polymers, antioxidizing agents, further additives, masters, etc.

A funnel 13 receives the material thus composed and enables the material to descend towards a pair of static mixers 16, 17, through a throttle valve 14, for example controlled by an actuator 15.

A first static mixer 16, positioned in a socket 18, provides an outer coat 19 in which a helical element 20 is positioned, and acts as a diverter and mixer of the material that is falling into it by gravity.

This first static mixer 16, can, for example, be made of Aisi 316 stainless steel, and is composed of the above-mentioned helical element consisting of a pronged coil positioned in a reduced section of the descent circuit of the materials in granules so as to obtain a good velocity.

This first static mixer 16 is at least partially engaged in an upper part of an outer casing 21 having a larger dimension than a second static mixer 17.

More specifically, said second static mixer 17 comprises a conical element 22 inside the outer casing 21. This conical element 22 has a series of tilted pass-through holes in its body. A first series of pass-through holes 23, 23', 23" extends from a central axial opening 24, formed above and centrally in the conical element 22, towards the lower periphery of the conical element 22.

A second series of pass-through holes 25, 25', 25", also tilted, extends from the upper periphery of the conical element 22 towards a central axial opening 26, formed below and centrally, in the conical element 22.

The second static mixer 17, made for example in PTFE, thus respectively defines an internal-external and external-internal "diverter". As can be seen, in fact, it sends to the centre half, the external half of the outlet section of the first mixer, and to the outside, the internal half of the same outlet section of the first mixer.

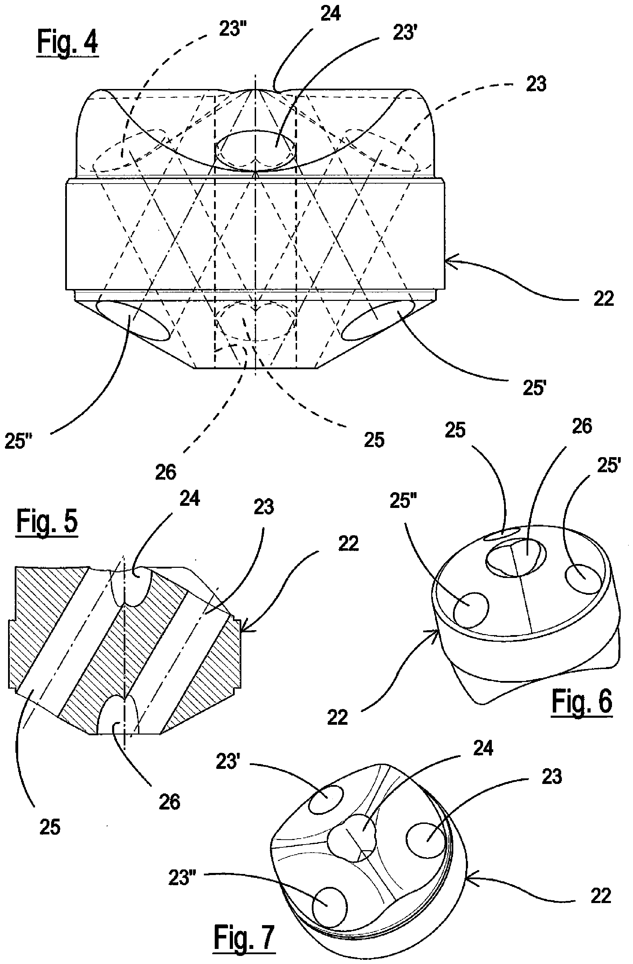

Figures 3 to 6 clearly show the arrangement of the two series of pass-through holes 23, 23', 23" and 25, 25', 25", in the conical element 22.

This arrangement is provided so that the material reaching this second static mixer 17 can be adequately mixed.

The mixing, in fact, is simply effected thanks to the intersection of the material that reaches the centre of the upper opening 24 and the three pass-through holes 25, 25', 25" formed above towards the periphery of the conical element 22 and which is diverted by the tilted pass-through holes. The material received thus exits towards the periphery and towards the centre of the lower part of the conical element 22, respectively.

A further socket 27, funnel-shaped and with a reduced section so as to favour the mixing effect, creates the connection of the two static mixers 16 and 17 with an underlying dynamic mixer 28.

In particular, said dynamic mixer 28 is positioned inside an underlying chamber 29 and comprises two counter-rotating shafts 30, 31 bearing appendages or prongs 32 protruding radially outwards, for mixing purposes.

Each shaft 30, 31 is connected to a motor 33, 34 that can also be actuated separately and with a programmable and variable rotation rate.

The dynamic mixer 28 can also be made of PTFE as also bushings 35 on which the shafts 30, 31 rotate. Specific labyrinth seals 36 ensure that the material does not penetrate the actuation area of the above-mentioned rotating parts.

The arrangement of the injection group 80 previously described for wetting the material mixed with silane or similar peroxides, fed as described above, is provided between the second static mixer 17 and said dynamic mixer 28 in a socket 27. The above-mentioned labyrinth seals 36 ensure that this liquid does not have access to the outside.

The extruder is then directly connected to an underlying opening 38 formed beneath the chamber 29 of the mixing group 52.

This arrangement of a pair of static mixers and a subsequent dynamic mixer between which the silane is fed, allow an excellent and safe mixing of the mixture of materials and liquid to be fed to the extruder, solving the problems of the prior art.

In the system according to the present invention, numerous innovative details and specific features characterizing it, are therefore present.

A first advantageous feature is the use of a dual technology, of both a gravimetric and mass type, for the measuring elements responsible for dosing the silane differently from what is used in the known art. This dual arrangement allows the congruency of the flow-rate readings to be controlled, and generates an alarm in the case of incongruity. Furthermore, the particular forms of the static mixers optimize not only this mixing phase, but also the whole mixing.

A second feature consists in the complete inertization of the atmosphere in contact with the silane: in particular with respect to the dynamic mixer 28 and relative seals. This inertization makes the functioning safe, preventing the potential triggering of explosions and losses of silane with possible pollution and corrosion.

The presence of various mixers suitable for favouring a safe and optimum mixing of the components has been advantageously introduced.

The introduction of silane or peroxides allows the recycling of the products thus formed.

Furthermore, the introduction of a double redundancy on the load cells considerably improves the control with the possibility of alarm in the case of error.

There is also the introduction of a control and regulation of the negative pressure of the nitrogen circuit, which has never been produced before.

The use of a high-speed, magnetic drag gear pump should also be noted, which improves the functioning of the whole system.

In view of the problems indicated by the use of particular materials and liquids, a particularly useful selection of materials has been made.

The use of pipes made of PTFE limits the adhesion of the silane and formation of crystallizations.

Furthermore, the use of PTFE in all the parts of the mixer, except for the rotors, also ensures a correct functioning without corrosion or the creation of drawbacks or problems in the product formed with the extruder.

## Claims

1. A dosage and injection system of substances with a fluid behaviour for at least one liquid to be fed to an extruder comprising
- a first main section (50)-for the transportation, pumping and measuring of silane or a peroxide contained in a drum,
- and a mixing group (52) in which the injection of said silane or peroxide into a supporting structure (11) of an extruder is effected,
wherein said first main section (50) provides
- a suction group (56) providing an interface between said drum and a subsequent gravimetric group (70) of the first main section (50),
- and a pumping and filtering group (53) being configured for sucking silane or peroxide from said drum by providing a negative pressure in said suction group with respect to the environment, the pumping and filtering group (53) further being configured for pumping the silane or peroxide through filters (47) to said subsequent gravimetric group (70) under an inert atmosphere by means of nitrogen provided from a tank (55), the sucked silane or peroxide to be sent to an injection group (80),
- said mixing group (52) also being configured to be kept under an inert atmosphere provided from tank (55),
**characterized in that**
- said system comprises a second section (51) for the electric control parts, pressurized in an inert atmosphere by means of nitrogen also provided from tank (55), operatively connected via a control line to the first main section (50) but located spatially separate from the first main section (50).

2. The system according to claim 1, **characterized in that** a mass flow meter (82) is positioned downstream of said gravimetric group (70) for measuring the mass flow-rate of silane or of peroxide.

3. The system according to claim 1 or 2, **characterized in that** said injection of silane or peroxide is executable upstream of a dynamic mixer (28) and downstream of at least one static mixer (16,17) both forming part of said mixing group (52).

4. The system according to claim 3, **characterized in that** said dynamic mixer (28) is configured to be maintained in an inert atmosphere.

5. The system according to claim 1 or 2, **characterized in that** said suction group (56) is composed of a probe (58) with a sealing valve (59) configured to keep the tube constantly full.

6. The system according claim 5, **characterized in that** said suction group (56) also comprises a tube configured for feeding nitrogen to the drum and a tube configured for equalizing the nitrogen pressures between the drum, the gravimetric group (70) and an expansion vessel (91).

7. The system according to claim 1 or 2, **characterized in that** said pumping group (53) is composed of a pneumatically actuated membrane valve (49) for intercepting the suction during inactivity and a pneumatically actuated membrane pump (48), in addition to a manual flow-diverter group for supply to filters to be selected.

8. The system according to claim 7, **characterized in that** said filters comprise two steel filters with a cartridge, one of said filters is active in filtering, whereas the other remains in stand-by to guarantee operating continuity during the cleaning of the first filter.

9. The system according to claim 1, **characterized in that** said gravimetric group (70) is configured to determine the current flow-rate of silane or of peroxide supplied by the system by means of a weight loss group with redundancy control.

10. The system according to claim 1 or 9, **characterized in that** said gravimetric group (70) is composed of a barrel (71) with a sealing lid suspended on two arms of a strain gauge bridge (72) connected to two load cells (73) .

11. The system according to claim 1 or 2, **characterized in that** said mixing group (52) comprises at least one hopper (12) connected in series to two static mixers (16,17) and to a subsequent dynamic mixer (28) towards an underlying opening (38) that can be connected to an extruder, said static mixers containing diverting elements (20;22) and said dynamic mixer (28) providing a pair of counter-rotating shafts (30,31) carrying prongs (32).

12. The system according to claim 11, wherein said mixing group (52) is **characterized in that** a first (16) of said static mixers (16,17) comprises a helical element (20) positioned inside a socket (18).

13. The system according to claim 11 or 12, wherein said mixing group (52) is **characterized in that** a second (17) of said static mixers (16,17) comprises a conical element (22) which acts as an inner diverter towards the outside and an outer diverter towards the inside, respectively, so as to convey the outer half of the outlet section of said first mixer (16) to the centre, and the inner half of the same outlet section of the first mixer (16) to the outside.

14. The system according to claim 11 or 12, wherein said mixing group (52) is **characterized in that** a second (17) of said static mixers (16,17) comprises a conical element (22) which has a series of six tilted pass-through holes (23, 23', 23", 25, 25', 25") in its body, which extend from an axial opening (24,26) formed centrally in the conical element (22), towards the periphery of the conical element (22).

15. The system according to claim 14, wherein said mixing group (52) is **characterized in that** a first series of three tilted holes (23, 23', 23") is formed in an upper part of said conical element (22) and a second series of tilted holes (25, 25', 25") is formed in a lower part of said conical element (22).

16. The system according to one or more of the previous claims from 11 to 15, wherein said mixing group (52) is **characterized in that** said dynamic mixer (28) is positioned in a chamber (29) positioned beneath said second static mixer (17).

17. The system according to one or more of the previous claims from 11 to 16, wherein said mixing group (52) is **characterized in that** an injection device (37) of a liquid is positioned between said dynamic mixer (28) and said second static mixer (17).

## Patentansprüche

1. System zum Dosieren und Injizieren von Substanzen mit einem Fluidverhalten für mindestens eine Flüssigkeit, die in einen Extruder eingespeist werden soll, umfassend:
- einen ersten Hauptabschnitt (50) zum Transportieren, Pumpen und Messen von Silan, oder eines Peroxids, das in einer Trommel enthalten ist,
- und eine Mischanordnung (52), in der das Injizieren des Silans oder Peroxids in eine Trägerstruktur (11) eines Extruders durchgeführt wird,
wobei der erste Hauptabschnitt (50) Folgendes bereitstellt
- eine Sauganordnung (56), die eine Schnittstelle zwischen der Trommel und einer nachgeschalteten gravimetrischen Anordnung (70) des ersten Hauptabschnitts (50) bereitstellt,
- und eine Pump- und Filtrationsanordnung (53), die so ausgelegt ist, dass sie Silan oder Peroxid aus der Trommel absaugt, indem sie in der Sauganordnung einen Unterdruck gegenüber der Umgebung bereitstellt, wobei die Pump- und Filtrationsanordnung (53) weiterhin dafür ausgelegt ist, das Silan oder Peroxid durch Filter (47) zu der nachgeschalteten gravimetrischen Anordnung (70) zu pumpen, unter einer Inertgasatmosphäre mittels Stickstoff, der aus einem Vorratsbehälter (55) bereitgestellt wird, wobei das angesaugte Silan oder Peroxid einer Injektionsanordnung (80) zugeführt werden soll,
- wobei die Mischanordnung (52) weiterhin dafür ausgelegt ist, unter einer Inertgasatmosphäre gehalten zu werden, die ausgehend von dem Vorratsbehälter (55) bereitgestellt wird,
**dadurch gekennzeichnet, dass**
- das System einen zweiten Abschnitt (51) für die elektrischen Steuerungsteile umfasst, der in einer Inertgasatmosphäre mittels Stickstoff unter Druck gesetzt wird, der ebenfalls ausgehend von dem Vorratsbehälter (55) bereitgestellt wird, wobei er über eine Steuerleitung betriebsfähig mit dem ersten Hauptabschnitt (50) verbunden, aber räumlich von dem ersten Hauptabschnitt (50) getrennt ist.

2. System nach Anspruch 1, **dadurch gekennzeichnet, dass** ein massenbezogener Durchflussmesser (82) stromabwärts der gravimetrischen Anordnung (70) angeordnet ist, um die massenbezogene Flussrate von Silan oder von Peroxid zu messen.

3. System nach Anspruch 1 oder 2, **dadurch gekennzeichnet, dass** die Injektion von Silan oder Peroxid auf der Anströmseite eines dynamischen Mischorgans (28) und auf der Abströmseite mindestens eines statischen Mischorgans (16, 17) ausgeführt werden kann, die beide Bestandteil der Mischanordnung (52) sind.

4. System nach Anspruch 3, **dadurch gekennzeichnet, dass** das dynamische Mischorgan (28) dafür ausgelegt ist, in einer Inertgasatmosphäre gehalten zu werden.

5. System nach Anspruch 1 oder 2, **dadurch gekennzeichnet, dass** die Sauganordnung (56) sich aus einer Sonde (58) mit einem abdichtenden Ventil (59) zusammensetzt, die dafür ausgelegt ist, die Rohrleitung ständig gefüllt zu halten.

6. System nach Anspruch 5, **dadurch gekennzeichnet, dass** die Sauganordnung (56) weiterhin eine Rohrleitung, die dafür ausgelegt ist, Stickstoff in die Trommel einzuspeisen, und eine Rohrleitung umfasst, die dafür ausgelegt ist, den jeweiligen Stickstoffdruck in der Trommel, der gravimetrischen Anordnung (70) und einem Ausdehnungsgefäß (91) auszugleichen.

7. System nach Anspruch 1 oder 2, **dadurch gekennzeichnet, dass** die Pumpanordnung (53) sich aus einem pneumatisch betätigten Membranventil (49) zum Unterbrechen des Saugvorgangs während eines inaktivierten Zustands und aus einer pneumatisch betätigten Membranpumpe (48) zusammensetzt, zuzüglich einer manuellen Strömungslenkungsanordnung zur Zuführung zu auszuwählenden Filtern.

8. System nach Anspruch 7, **dadurch gekennzeichnet, dass** die Filter zwei Stahlfilter mit einer Kartusche umfassen, wobei einer der Filter aktiv das Filtrieren bewirkt, wohingegen der andere in Bereitschaft verbleibt, um während des Reinigens des ersten Filters einen durchgehenden Betrieb sicherzustellen.

9. System nach Anspruch 1, **dadurch gekennzeichnet, dass** die gravimetrische Gruppe (70) dafür ausgelegt ist, die aktuelle Flussrate von Silan oder von Peroxid, das von dem System bereitgestellt wird, mittels einer Gewichtsverlustanordnung mit redundanter Steuerung zu bestimmen.

10. System nach Anspruch 1 oder 9, **dadurch gekennzeichnet, dass** sich die gravimetrische Anordnung (70) aus einem Hohlzylinder (71) mit einem abdichtenden Deckel zusammensetzt, der an zwei Zweigen einer DMS-Brücke (72) aufgehängt ist, die mit zwei Kraftaufnehmern (73) verbunden sind.

11. System nach Anspruch 1 oder 2, **dadurch gekennzeichnet, dass** die Mischanordnung (52) mindestens einen Fülltrichter (12) umfasst, der in Reihe mit zwei statischen Mischorganen (16, 17) und mit einem nachgeschalteten dynamischen Mischorgan (28) verbunden ist, wobei er einer darunterliegenden Öffnung (38) zugewandt ist, die mit einem Extruder verbunden sein kann, wobei die statischen Mischorgane lenkende Elemente (20; 22) enthalten und das dynamische Mischorgan (28) ein Paar gegenläufiger Wellen (30, 31) bereitstellt, die mit Zacken (32) versehen sind.

12. System nach Anspruch 11, wobei die Mischanordnung (52) **dadurch gekennzeichnet ist, dass** ein erstes (16) der statischen Mischorgane (16, 17) ein spiralförmiges Element (20) umfasst, das in einem Halter (18) angeordnet ist.

13. System nach Anspruch 11 oder 12, wobei die Mischanordnung (52) **dadurch gekennzeichnet ist, dass** ein zweites (17) der statischen Mischorgane (16, 17) ein kegelförmiges Element (22) umfasst, das als innenliegende, nach außen wirkende Lenkvorrichtung beziehungsweise als außenliegende, nach innen wirkende Lenkvorrichtung wirkt, derart, dass die äußere Hälfte des Auslassquerschnitts des ersten Mischorgans (16) zur Mitte hin befördert wird und die innere Hälfte ebendieses Auslassquerschnitts des ersten Mischorgans (16) nach außen hin befördert wird.

14. System nach Anspruch 11 oder 12, wobei die Mischanordnung (52) **dadurch gekennzeichnet ist, dass** ein zweites (17) der statischen Mischorgane (16, 17) ein kegelförmiges Element (22) umfasst, das in seinem Körper eine Reihe von sechs schrägliegenden Durchgangslöchern (23, 23', 23", 25, 25', 25") aufweist, die sich ausgehend von einer axialen Öffnung (24, 26), die mittig in dem kegelförmigen Element (22) ausgebildet ist, zum Randbereich des kegelförmigen Elements (22) erstrecken.

15. System nach Anspruch 14, wobei die Mischanordnung (52) **dadurch gekennzeichnet ist, dass** eine erste Reihe von drei schrägliegenden Löchern (23, 23', 23") in einem oberen Teilstück des kegelförmigen Elements (22) ausgebildet ist und eine zweite Reihe von schrägliegenden Löchern (25, 25', 25") in einem unteren Teilstück des kegelförmigen Elements (22) ausgebildet ist.

16. System nach einem oder mehreren der vorhergehenden Ansprüche 11 bis 15, wobei die Mischanordnung (52) **dadurch gekennzeichnet ist, dass** das dynamische Mischorgan (28) in einer Kammer (29) angeordnet ist, die sich unterhalb des zweiten statischen Mischorgans (17) befindet.

17. System nach einem oder mehreren der vorhergehenden Ansprüche 11 bis 16, wobei die Mischanordnung (52) **dadurch gekennzeichnet ist, dass** eine Vorrichtung (37) zum Injizieren einer Flüssigkeit zwischen dem dynamischen Mischorgan (28) und dem zweiten statischen Mischorgan (17) angeordnet ist.

## Revendications

1. Système de dosage et d'injection de substances présentant un comportement fluide pour au moins un liquide devant être introduit dans une extrudeuse, comprenant
- une première section principale (50) pour le transport, le pompage et la mesure d'un silane ou d'un peroxyde contenu dans un fût
- et un groupe malaxeur (52) dans lequel l'injection dudit silane ou peroxyde dans une structure de support (11) d'une extrudeuse est effectuée,
dans lequel ladite première section principale (50) possède
- un groupe d'aspiration (56) offrant une interface entre ledit fût et un groupe gravimétrique (70) de ladite première section principale (50) situé en aval et
- un groupe de pompage et de filtrage (53) configuré pour aspirer le silane ou le peroxyde dudit fût en créant une pression négative dans ledit groupe d'aspiration par rapport à l'environnement, le groupe de pompage et de filtrage (53) étant en outre configuré pour pomper le silane ou le peroxyde à travers des filtres (47) dans ledit groupe gravimétrique (70) situé en aval sous atmosphère inerte au moyen d'azote dispensé par une cuve (55), le silane ou le peroxyde aspiré devant ensuite être envoyé à un groupe d'injection (80),
le groupe malaxeur (52) étant également configuré pour être maintenu sous atmosphère inerte grâce à la cuve (55),
**caractérisé en ce que**
ledit système comprend une seconde section (51) pour les éléments de commande électrique, pressurisée sous atmosphère inerte au moyen d'azote également dispensé par la cuve (55), connectée fonctionnellement à la première section principale (50) par une ligne de commande mais séparée spatialement de la première section principale (50).

2. Système selon la revendication 1, **caractérisé en ce qu'**un débitmètre massique (82) est positionné en aval dudit groupe gravimétrique (70) pour mesurer le débit massique de silane ou de peroxyde.

3. Système selon la revendication 1 ou 2, **caractérisé en ce que** ladite injection de silane ou de peroxyde est exécutable en amont d'un malaxeur dynamique (28) et en aval d'au moins un malaxeur statique (16, 17), tous deux faisant partie dudit groupe malaxeur (52).

4. Système selon la revendication 3, **caractérisé en ce que** ledit malaxeur dynamique (28) est configuré pour être maintenu sous atmosphère inerte.

5. Système selon la revendication 1 ou 2, **caractérisé en ce que** ledit groupe d'aspiration (56) est composé d'une sonde (58) avec un clapet d'étanchéité (59) configuré pour conserver le tube plein en permanence.

6. Système selon la revendication 5, **caractérisé en ce que** ledit groupe d'aspiration (56) comprend aussi un tube configuré pour alimenter le fût en azote et un tube configuré pour égaliser les pressions d'azote entre le fût, le groupe gravimétrique (70) et un vase d'expansion (91).

7. Système selon la revendication 1 ou 2, **caractérisé en ce que** ledit groupe de pompage (53) est composé d'une soupape à membrane à commande pneumatique (49) pour intercepter l'aspiration pendant l'inactivité et d'une pompe à membrane à commande pneumatique (48), en plus d'un groupe de dérivation de flux manuel pour alimenter des filtres à sélectionner.

8. Système selon la revendication 7, **caractérisé en ce que** lesdits filtres comprennent deux filtres en acier avec une cartouche, un desdits filtres opérant le filtrage tandis que l'autre reste en mode de veille pour garantir la continuité du fonctionnement pendant le nettoyage du premier filtre.

9. Système selon la revendication 1, **caractérisé en ce que** ledit groupe gravimétrique (70) est configuré pour déterminer le débit courant de silane ou de peroxyde fourni par le système au moyen d'un groupe de perte de poids à commande de redondance.

10. Système selon la revendication 1 ou 9, **caractérisé en ce que** ledit groupe gravimétrique (70) est composé d'un baril (71) avec un couvercle d'étanchéité suspendu sur deux bras d'un pont de jauges de contrainte (72) connecté à deux cellules de charge (73).

11. Système selon la revendication 1 ou 2, **caractérisé en ce que** ledit groupe malaxeur (52) comprend au moins une trémie (12) connectée en série à deux malaxeurs statiques (16, 17) et à un malaxeur dynamique (28) situé en aval en direction d'une ouverture sous-jacente (38) qui peut être connectée à une extrudeuse, lesdits malaxeurs statiques contenant des éléments de dérivation (20, 22) et ledit malaxeur dynamique (28) possédant une paire d'arbres contrarotatifs (30, 31) portant des volets (32).

12. Système selon la revendication 11, dans lequel ledit groupe malaxeur (52) est **caractérisé en ce qu'**un premier (16) desdits malaxeurs statiques (16, 17) comprend un élément hélicoïdal (20) positionné à l'intérieur d'une prise (18).

13. Système selon la revendication 11 ou 12, dans lequel ledit groupe malaxeur (52) est **caractérisé en ce qu'**un second (17) desdits malaxeurs statiques (16, 17) comprend un élément conique (22) qui agit respectivement comme un dérivateur intérieur vers l'extérieur et comme un dérivateur extérieur vers l'intérieur, de sorte à transporter la moitié extérieure de la section de sortie dudit premier malaxeur (16) au centre et la moitié intérieure de la même section de sortie du premier malaxeur (16) à l'extérieur.

14. Système selon la revendication 11 ou 12, dans lequel ledit groupe malaxeur (52) est **caractérisé en ce qu'**un second (17) desdits malaxeurs statiques (16, 17) comprend un élément conique (22) qui a une série de six trous traversants inclinés (23, 23', 23", 25, 25', 25") dans son corps qui s'étend à partir d'une ouverture axiale (24, 26) formée au centre de l'élément conique (22) vers la périphérie de l'élément conique (22).

15. Système selon la revendication 14, dans lequel ledit groupe malaxeur (52) est **caractérisé en ce qu'**une première série de trois trous inclinés (23, 23', 23") est formée dans une partie supérieure dudit élément conique (22) et qu'une seconde série de trois trous inclinés (25, 25', 25") est formée dans une partie inférieure dudit élément conique (22).

16. Système selon une ou plusieurs des revendications précédentes 11 à 15, dans lequel ledit groupe malaxeur (52) est **caractérisé en ce que** ledit malaxeur dynamique (28) est positionné dans une chambre (29) positionnée au-dessous dudit second malaxeur statique (17).

17. Système selon une ou plusieurs des revendications précédentes 11 à 16, dans lequel ledit groupe malaxeur (52) est **caractérisé en ce qu'**un dispositif d'injection (37) d'un liquide est positionné entre ledit malaxeur dynamique (28) et ledit second malaxeur statique (17).
